# FASCICULE DE BREVET EUROPEEN

(11) **EP 2 044 797 B1**
(45) Date de publication et mention de la délivrance du brevet: **01.05.2013**
(21) Numéro de dépôt: 07803991.4
(22) Date de dépôt: 06.07.2007
(51) Int. Cl.: H04W 4/00, H04L 29/06

(54) **BASCULEMENT DE SESSIONS MULTIMEDIAS D'UN TERMINAL MOBILE VERS UN EQUIPEMENT D'UN RESEAU LOCAL**
WECHSEL VON MULTIMEDIASITZUNGEN EINES MOBILEN ENDGERÄTS ZU EINEM GERÄT EINES LOKALEN HEIMNETZES
SWITCHING OF MULTIMEDIA SESSIONS OF A MOBILE TERMINAL TO AN EQUIPMENT OF A LOCAL HOME NETWORK

(30) Priorité: 18.07.2006 FR 0653007
(43) Date de publication de la demande: 08.04.2009
(73) Titulaire: FRANCE TELECOM, 75015 Paris (FR)
(72) Inventeur: LAMER, Bastien, F-22300 Lannion (FR); BAZON, Isabelle, F-22300 Lannion (FR); BIHANNIC, Nicolas, F-22560 Trebeurden (FR)
(86) Numéro de dépôt international: PCT/FR2007/051612
(87) Numéro de publication internationale: WO 2008/009838

(56) Documents cités:
- EP-A- 1 622 315
- US-A1- 2005 153 698
- US-B1- 6 594 699

## Description

### Domaine de l'invention et art antérieur

La présente invention concerne les services multimédias, tels que les services conversationnels, les messagerie instantanées ou les diffusions de programmes audiovisuels, qui sont accessibles à la fois sur un terminal mobile, comme par exemple un téléphone mobile, un assistant personnel numérique (PDA) communicant, SmartPhone, etc., et sur des équipements fixes comme par exemple un ordinateur PC, une télévision, etc.

Elle concerne plus particulièrement les possibilités de basculement offertes à un utilisateur en situation de mobilité pour optimiser le suivi des sessions multimédias initiées en extérieur ("outdoor") à partir du terminal mobile via un réseau de communication mobile (par exemple via le réseau GSM, GPRS, UMTS, I-WLAN, etc.) lorsque ce dernier accède à un environnement domestique ("indoor") comprenant un ou plusieurs équipements fixes susceptibles de supporter les sessions multimédias en cours.

Plusieurs solutions de convergence de services et de réseaux à partir de réseaux fixes et mobiles, appelées "convergence fixe-mobile", sont aujourd'hui proposées par des équipementiers de télécommunications et commencent à être commercialement déployées par les opérateurs de télécommunications.

Toutefois, les solutions des équipementiers ne sont pas toujours retenues par les organismes de standardisation (comme le 3GPP ("Third Generation Partnership Project") pour les réseaux mobiles ou l'ETSI TISPAN pour les réseaux fixes) et restent alors des solutions dites "propriétaires", c'est-à-dire des solutions limitées à des services multimédias enrichis spécifiques au terminal fourni par l'équipementier et qui ne permettent pas l'utilisation de services simples tels qu'une session de messagerie instantanée avec partage de contenus entre plusieurs utilisateurs lorsque l'environnement n'est pas entièrement compatible avec la solution de l'équipementier.

Par ailleurs, les standards de communication mobile en vigueur (voir notamment le document 3GPP TS 23.228 V6.4.1 (2004-01), 3rd Generation Partnership Project; Technical Spécification Group Services and System Aspects; IP Multimédia Sibsystem (IMS) ; Stage 2 (Release 6)>>) proposent une convergence fixe-mobile avec support de la mobilité de l'utilisateur en s'appuyant sur une architecture IMS ("IP Multimédia Subsystem") propre au réseau mobile, cette architecture IMS étant réutilisée et adaptée (par l'ETSI TISPAN) pour prendre en compte les spécificités des réseaux fixes. Toutefois, l'approche de convergence fixe-mobile envisagée dans les standards actuels de communication mobile (3GPP) ne considère que le cas où utilisateur se déplace d'un environnement extérieur à un environnement domestique en utilisant toujours le même terminal.

Les solutions actuelles, qu'elles soient propriétaires ou issues des spécifications, permettent au mieux à un utilisateur (pénétrant dans un environnement domestique équipé d'un réseau local fixe et ayant une session multimédia en cours sur son terminal mobile) de poursuivre sa session multimédia sur le réseau local fixe de l'environnement domestique à la place du réseau mobile sur lequel elle a été préalablement initiée mais toujours avec le même terminal. La convergence fixe-mobile ne se fait qu'au niveau du réseau de transport de l'information, la session de l'utilisateur transitant non plus par le réseau de communication mobile mais par le réseau fixe dès lors que l'utilisateur est attaché au réseau local domestique.

Par conséquent, aucune des solutions actuellement proposées ne prend en compte les équipements domestiques disponibles dans un réseau local domestique pour proposer à l'utilisateur des solutions de basculement optimisées notamment en termes de coût, d'ergonomie, de ressources, etc. Pourtant un utilisateur qui s'approche d'un réseau local domestique peut souhaiter transférer sa ou ses sessions multimédias en cours vers un ou plusieurs équipements du réseau local domestique plus adaptés à la ou les sessions.

### Objet et description succincte de l'invention

La présente invention propose une solution permettant à un utilisateur d'un terminal mobile de bénéficier, pour la ou les sessions multimédias en cours sur son terminal mobile, des ressources disponibles dans un environnement domestique lorsqu'il pénètre dans le réseau local de cet environnement.

A cet effet, l'invention concerne un procédé de basculement de session multimédia d'un terminal mobile connecté à un réseau de communication mobile sur au moins un équipement domestique connecté à un réseau local domestique comprenant en outre une passerelle domestique, le terminal mobile et la passerelle domestique étant en liaison avec un système applicatif par lequel des sessions multimédias sont établies, ledit procédé comprenant une étape d'établissement d'au moins une première session multimédia entre le terminal mobile et le système applicatif via le réseau de communication mobile, caractérisé en ce qu'il comprend en outre les étapes suivantes:
a) détection de la proximité du réseau local domestique par le terminal mobile,
b) sélection d'un ou plusieurs équipements domestiques aptes à supporter la première session multimédia en cours sur le terminal mobile,
c) validation à partir du terminal mobile d'au moins un équipement domestique parmi les équipements sélectionnés,
d) établissement d'une deuxième session multimédia entre l'équipement domestique validé et le système applicatif,

Le procédé de l'invention permet à un utilisateur pénétrant dans un environnement domestique de basculer sa session multimédia en cours sur son terminal mobile sur un équipement domestique du réseau local. Ainsi, avec ou sans interruption du service (i.e. perceptible par l'utilisateur) fourni au travers de la session multimédia en cours, l'utilisateur peut profiter des potentialités offertes par les équipements disponibles dans le réseau local domestique en choisissant l'équipement le mieux adapté pour la session (capacités de traitement des données, d'affichage, de son, etc.). En outre, il peut aussi bénéficier d'une réduction des coûts de communication par l'utilisation de services via un réseau fixe plutôt qu'un réseau mobile.

Pour l'opérateur auprès duquel l'utilisateur a initié la session multimédia à partir de son terminal mobile, le procédé de l'invention lui permet de fidéliser sa clientèle en proposant de nouveaux services innovants qui sont disponibles pour l'utilisateur quel que soit le réseau d'accès utilisé. L'opérateur peut en outre assurer à ses utilisateurs une continuité du service indépendamment de l'environnement dans lequel ils se trouvent (extérieur ou domestique) et, par conséquent, conserver ses clients sur toute la durée de la session multimédia.

Selon un aspect de l'invention le procédé comprend en outre, après l'étape a) et avant l'étape b), une étape a1) d'envoi, par le terminal mobile à la passerelle domestique du réseau local domestique, de données relatives à l'établissement de la première session multimédia en cours sur le terminal mobile. Ainsi, la passerelle domestique pourra sélectionner, dans l'étape b), le ou les équipements domestiques en fonction de ces données et des capacités des équipements domestiques connectés au réseau local domestique à supporter la première session multimédia. Le cas échéant, si les capacités des terminaux domestiques disponibles sont au minimum équivalentes à celles du terminal mobile, une deuxième session multimédia pourra être définie entre le système applicatif et le terminal domestique.

Selon un autre aspect de l'invention, la passerelle domestique recense, régulièrement ou en réponse à la réception des données relatives à l'établissement de la première session multimédia, au moins les capacités des équipements domestiques connectés au réseau local domestique, ce qui permet de proposer à l'utilisateur pour le basculement une liste d'équipements adaptés qui sont réellement disponibles à cet instant.

Dans l'étape d), la deuxième session multimédia peut être établie en réponse à une demande d'établissement de session multimédia envoyée par le terminal mobile au système applicatif ou en réponse à une demande d'établissement de session multimédia envoyée par la passerelle domestique.

Dans le premier cas, des données relatives à l'établissement de la deuxième session multimédia entre l'équipement domestique validé et le système applicatif sont envoyées par la passerelle domestique au terminal mobile. L'utilisateur peut ainsi contrôler le moment du basculement en ne le déclenchant, par exemple, que lorsqu'il est physiquement présent devant l'équipement domestique choisi.

La présente invention concerne également un terminal mobile comprenant des moyens pour détecter le champ radio d'une borne d'accès d'un réseau local domestique, ledit réseau local domestique comprenant un ou plusieurs équipements domestiques reliés à une passerelle domestique et des moyens pour échanger des données avec ladite passerelle via une liaison radio avec la borne d'accès, caractérisé en ce qu'il comprend en outre des moyens pour, en réponse à la détection du champ radio, envoyer à ladite passerelle domestique des informations relatives à l'établissement d'une session multimédia en cours entre ledit terminal mobile et un système applicatif.

Avec un tel terminal mobile, l'utilisateur peut basculer sa session multimédia en cours sur un équipement domestique du réseau local et, par conséquent, bénéficier d'une continuité de service sans être obligé de poursuivre la session sur son terminal mobile lorsqu'il pénètre dans un environnement domestique.

Selon un aspect de l'invention, le terminal mobile comprend en outre des moyens pour afficher une liste d'équipements domestiques envoyée par la passerelle domestique et des moyens pour sélectionner au moins un équipement domestique dans ladite liste. L'utilisateur peut ainsi choisir l'équipement domestique sur lequel il souhaite poursuivre sa session multimédia.

Le terminal mobile peut comprendre en outre des moyens pour envoyer une demande d'établissement d'une nouvelle session multimédia entre le ou les appareils domestiques sélectionnés et le système applicatif, ladite demande étant basée sur les informations relatives à l'établissement de la session multimédia en cours entre le terminal mobile et le système applicatif. Dans ce cas, l'utilisateur décide du moment du basculement.

L'invention concerne également un produit programme d'ordinateur téléchargeable depuis un réseau de communication et/ou stocké sur un support lisible par ordinateur et/ou exécutable par un microprocesseur du terminal mobile décrit ci-dessus, le programme comportant des instructions de code de programme pour, en réponse à la détection du champ radio, envoyer à ladite passerelle domestique des informations relatives à l'établissement d'une session multimédia en cours entre ledit terminal mobile et un système applicatif.

Le produit programme d'ordinateur comprend en outre des instructions pour afficher une liste d'équipements domestiques envoyée par la passerelle domestique et des moyens pour sélectionner au moins un équipement domestique dans ladite liste.

Le produit programme d'ordinateur peut comprendre en outre des instructions pour envoyer une demande d'établissement d'une nouvelle session multimédia entre le ou les appareils domestiques sélectionnés et le système applicatif, ladite demande étant basée sur les informations relatives à l'établissement de la session multimédia en cours entre le terminal mobile et le système applicatif.

Ce programme peut être stocké sur un support d'enregistrement.

L'invention concerne encore une passerelle domestique en liaison avec une pluralité d'équipements domestiques dans un réseau local domestique, caractérisée en ce qu'elle comprend des moyens pour recenser au moins les capacités des équipements domestiques connectés audit réseau local domestique et pour déterminer une liste d'équipements domestiques aptes à supporter une session multimédia en cours entre un terminal mobile et un système applicatif en fonction desdites capacités recensées et de données relatives à l'établissement de la session multimédia en cours.

Grâce à la passerelle domestique selon l'invention, une gestion dynamique des équipements du réseau local domestique est effectuée, ce qui permet de connaître en permanence les capacités du réseau local domestique réellement disponibles.

Selon un aspect de l'invention, la passerelle comprend en outre des moyens pour envoyer une demande d'établissement d'une nouvelle session multimédia entre au moins un appareil domestique et le système applicatif, ladite demande étant basée sur les informations relatives à l'établissement de la session multimédia en cours entre ledit terminal mobile et le système applicatif.

L'invention concerne enfin un produit programme d'ordinateur téléchargeable depuis un réseau de communication et/ou stocké sur un support lisible par ordinateur et/ou exécutable par un microprocesseur de la passerelle domestique décrite précédemment, caractérisé en ce qu'il comprend des instructions pour recenser au moins les capacités des équipements domestiques connectés au réseau et pour déterminer une liste d'équipements domestiques aptes à supporter une session multimédia en cours entre un terminal mobile et un système applicatif en fonction desdites capacités recensées et de données relatives à l'établissement de la session multimédia en cours.

Le produit programme d'ordinateur peut comprendre en outre des instructions de code de programme pour envoyer une demande d'établissement d'une nouvelle session multimédia entre au moins un appareil domestique et le système applicatif, ladite demande étant basée sur les informations relatives à l'établissement de la session multimédia en cours entre le terminal mobile et le système applicatif.

Ce programme peut être stocké sur un support d'enregistrement.

Le document EP-1622315 décrit un système et procédé pour effectuer un basculement de session multimédia d'un terminal de session d'un terminal mobile entre un réseau de communication mobile et un réseau domestique.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique globale d'un système conformément à un mode de réalisation de l'invention,
- la figure 2 illustre l'enchaînement des étapes mises en oeuvre dans un procédé de basculement de sessions multimédia conformément à un mode de réalisation de l'invention,
- la figure 3 illustre l'enchaînement des étapes mises en oeuvre dans un procédé de basculement de sessions multimédia conformément à un autre mode de réalisation de l'invention.

### Description détaillée des modes de réalisation de l'invention

L'invention est destinée à permettre le basculement d'une ou plusieurs sessions multimédias d'un terminal mobile connecté à un réseau de télécommunication mobile sur un ou plusieurs équipements domestiques appartenant à un réseau local domestique.

Par session multimédia, on désigne toute période de communication continue pendant laquelle un utilisateur accède à un ou plusieurs médias, comme de la voix, du texte, de l'image, de la vidéo ou autre, à partir d'un terminal. A titre d'exemple, une session multimédia peut correspondre à une simple conversation téléphonique, une visiocommunication, la diffusion d'un programme audiovisuel, une conversation sur messagerie instantanée, etc.

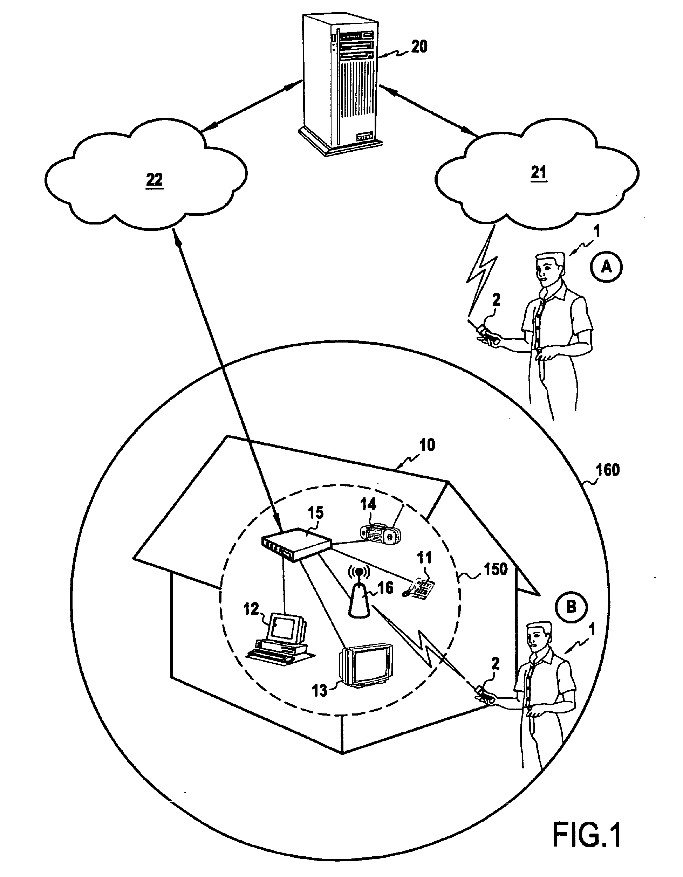

La figure 1 est une vue globale d'un système de l'invention conformément à un mode de réalisation de l'invention. Les éléments qui interviennent lors de la mise en oeuvre du procédé de basculement de sessions multimédias de l'invention dans le système de la figure 1 sont un utilisateur 1 équipé d'un terminal mobile 2 (par exemple téléphone mobile, assistant personnel digital PDA, smartphone, etc.), un environnement domestique 10 (par exemple une habitation, un lieu public (gare, aéroport, restaurant...)) comprenant une pluralité d'équipements domestiques tels qu'un téléphone fixe 11, un ordinateur PC 12, un poste de télévision 13 et un lecteur audio 14, une passerelle domestique 15 ("Home Gateway") et au moins une borne radio 16 (par exemple une borne WiFi™) dont le champ radio couvre une zone radio domestique 160, et un système applicatif 20. Le téléphone fixe 11, l'ordinateur PC 12, le poste de télévision 13, le lecteur audio 14, la borne radio 16 et la passerelle domestique 15 à laquelle sont reliés ces derniers forment un réseau local domestique 150. Sur la figure 1, on considère que l'environnement extérieur correspond à tout l'espace situé en dehors de la zone radio domestique 160

Le système applicatif 20 qui peut être mise en oeuvre sur un serveur distant est destiné à gérer l'établissement et le suivi de toutes les sessions multimédias concernant l'utilisateur sur son terminal mobile (session initiée ou session à destination de l'utilisateur comme dans le cas d'une session entrante destinée à l'utilisateur). Le système applicatif 20 peut par exemple être un système du sous-domaine IP Multimédia ou IMS ("IP Multimédia Subsystem") qui est une architecture connue standardisée pour les réseaux de nouvelle génération NGN ("Next Generation Networking") pour les opérateurs de téléphonie et qui permet de fournir des services multimédias fixes et mobiles. Ce système utilise la technologie voix sur réseau IP ("I nternet Protocol") basée sur une implémentation 3GPP ("3rd Generation Partnership Project") standardisée de SIP ("Session Initiation Protocol") fonctionnant sur un protocole standard IP. L'architecture IMS supporte les systèmes téléphoniques existants et permet aux utilisateurs d'utiliser des services multimédias aussi bien en déplacement dans un environnement extérieur (situation de "roaming") que depuis un environnement domestique. A cet effet, l'architecture IMS utilise les protocoles standards IP, définis par l'IETF ("Internet Engineering Task Force"). Ainsi, une session multimédia, qu'elle s'effectue entre deux utilisateurs sous architecture IMS, entre un utilisateur IMS et un internaute, ou bien encore entre deux internautes, est établie en utilisant exactement le même protocole. Les interfaces de développement de services sont également basées sur les protocoles IP.

L'architecture d'un système IMS, les différentes entités d'un tel système, l'enregistrement des équipements des utilisateurs auprès d'un système IMS ainsi que l'établissement d'une session multimédia dans un système IMS sont notamment décrits en détail dans le document EP 1 560 368 (ou US 11/046 480), dans le document << 3GPP TS 23.228 V6.4.1 (2004-01), 3rd Generation Partnership Project; Technical Spécification Group Services and System Aspects; IP-Multimedia Subsystem (IMS) ; Stage 2 (Release 6)», disponible à l'adresse Internet http://www.3gpp.org/ftp/specs/archive/23 series/23.228/, et dans le document RFC3261 du groupe de travail IETF (groupe de travail sur le réseau Internet, ou Internet Engineering Task Force), disponible à l'adresse Internet http://www.ietf.org/rfc.

La liaison entre le système applicatif 20 et le terminal mobile 2 est assurée via un réseau de communication mobile 21 (par exemple via le réseau GSM, GPRS, UMTS, I-WLAN, etc.) tandis que la liaison entre le système applicatif 20 et la passerelle domestique 15 se fait via un réseau de communication fixe 22 (par exemple via un réseau RTC, xDSL, HFC, FTTH, etc.).

La passerelle domestique 15 est l'interface entre un réseau étendu tel que le réseau de communication fixe 22 (interface WAN "Wide Area Network") et un réseau local tel que le réseau local domestique 150 (interface LAN "Local Area Network"). Elle est le point central de tous les flux médias: téléphone, données, vidéos, images, musiques... De façon connue, la passerelle domestique, comme par exemple la passerelle domestique Livebox™ de la société France Télécom™, assure le pilotage de tous les équipements domestiques par des liaisons filaires ou radio (par exemple une liaison WiFi™) pour la diffusion sur un ou plusieurs de ces équipements des flux médias entrants dans le réseau local domestique. Un exemple d'une telle passerelle domestique est notamment décrit en détail dans le document WO 2005/112365.

Conformément à l'invention, la passerelle domestique 15 comprend en outre des fonctionnalités spécifiques lui permettant de connaître en temps réel les ressources en équipements domestiques du réseau local de manière à proposer un ou plusieurs équipements domestiques aptes à supporter la session multimédia en cours sur le terminal mobile de l'utilisateur pour le basculement lorsque ce dernier pénètre dans la zone radio domestique 160. A cet effet, la passerelle domestique 15 peut tenir à jour une table permanente pour la gestion et la connaissance du réseau local domestique 150 qui comprend notamment la présence des équipements domestiques connectés au réseau local domestique, les adresses IP attribuées à ces équipements, les caractéristiques des sessions multimédias en cours dans le réseau local domestique ainsi que les algorithmes de compression/décompression ou "CoDecs" utilisés (par exemple le CoDec M-JPEG). La gestion permanente d'une table n'est pas obligatoire, la passerelle domestique peut également établir ces informations de façon instantanée lorsque c'est nécessaire. La passerelle domestique est en outre apte à échanger des données avec le terminal mobile 2 via la borne radio 16 pour notamment transmettre au terminal mobile une liste des équipements domestiques aptes à supporter la session multimédia en cours sur le terminal mobile et pour recevoir le ou les équipements domestiques sélectionnés dans cette liste à partir du terminal mobile. Ces fonctionnalités sont intégrées dans la passerelle domestique sous forme d'instructions informatiques.

En outre, préalablement à la mise en place de ce service, le terminal mobile est doté de moyens capables de réaliser un appairage (ou association) avec la borne radio 16 formant le point d'accès radio de la passerelle domestique 15, ceci afin de détecter la zone radio domestique 160. A cet effet, il y aura reconnaissance par le terminal mobile 2 du réseau formant la zone radio domestique 160. Dans le cas par exemple d'une zone radio domestique formée par un champ WiFi™, le terminal mobile sera apte à repérer l'identifiant du réseau WiFi™ (SSID) qui est diffusé périodiquement par le point d'accès (la borne radio 16). Le terminal mobile 2 comprend, conformément à l'invention, une application ou logiciel client de surveillance de la réception de l'identifiant du réseau radio correspondant à la zone radio domestique. La détection de la zone radio domestique 160 par le terminal mobile se fait, de façon connue, selon les protocoles et principes définis par le type de liaison qui est utilisé (ex. WiFi™). Le principe général étant que le terminal mobile 2 est en position d'écoute (mode détection) d'un signal radio émis par le point d'accès constitué par la borne radio 16.

Par ailleurs, dans le cas d'un réseau WiFi™, le niveau de sécurité de l'appairage entre le terminal mobile et le point d'accès au réseau radio de la zone radio domestique peut être augmenté par l'utilisation de clefs WEP ("Wired Equivalent Privacy") et WPA ("WiFi™ Protected Access") correspondant à des protocoles de sécurité bien connus définis respectivement dans le standard IEEE 802.11 et dans le standard IEEE 802.11i.

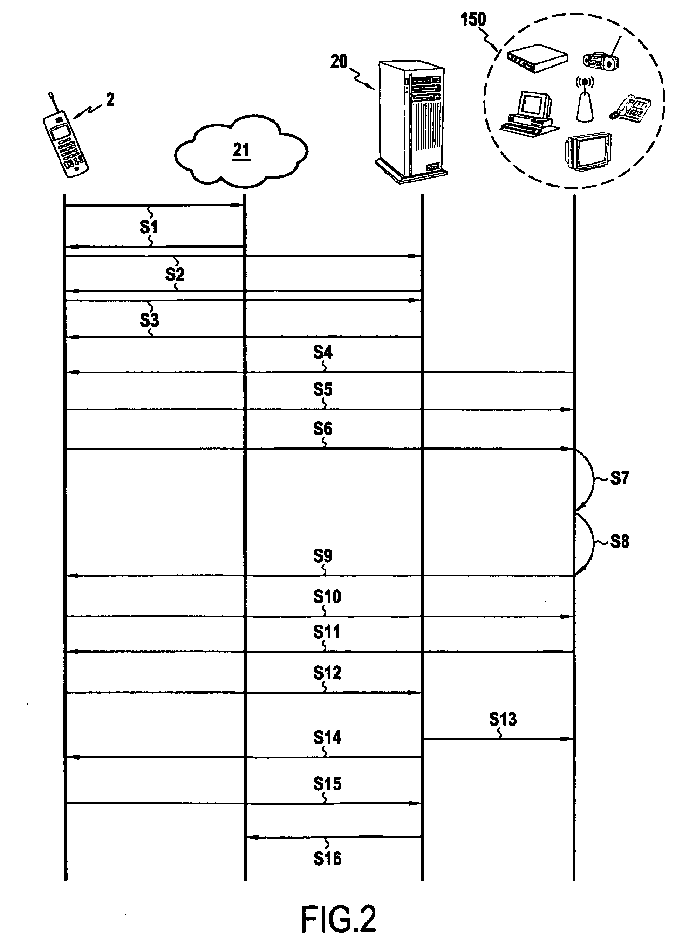

On décrit maintenant en relation avec la figure 2 un procédé de basculement de session multimédia conformément à un mode de réalisation de l'invention qui est mis en oeuvre dans le système de la figure 1.

Pour des raisons de simplification, nous ne considérerons ici que la situation où :
- il n'existe qu'un point d'accès radio à la zone radio domestique 160: la borne radio 16,
- l'utilisateur 1 n'a qu'une seule session multimédia A en cours lors du basculement,
- le basculement ne se fait que sur un équipement domestique du réseau local domestique 150.

Dans la mise en oeuvre décrite en relation avec la figure 2, le basculement de la session multimédia est déclenché par le terminal mobile de l'utilisateur vers le système applicatif. Le service considéré ici comme faisant l'objet de la session multimédia est un service conversationnel tel qu'une conversation par messagerie instantanée ("chat") entre deux utilisateurs.

Au départ (étape S1), l'utilisateur 1 se connecte au réseau de communication mobile 21 en environnement extérieur (situation "outdoor"), c'est-à-dire qu'il accède audit réseau dans un espace situé en dehors de la zone radio domestique 160. Le réseau de communication mobile peut être par exemple un réseau bien connu UMTS ("Universal Mobile Telecommunication System") auquel le terminal mobile accède en s'attachant auprès d'un noeud de support GPRS (noeud SGSN) de son opérateur tel que spécifié par la procédure décrite dans la spécification TS 33.102 ("Security architecture"). La base de données HLR ("Home Location Register") qui stocke les données du profil réseau de l'utilisateur génère les vecteurs d'authentification au noeud SGSN, une authentification mutuelle entre le terminal et le noeud SGSN étant ensuite réalisée.

Après s'être connecté au réseau de communication mobile 21, l'utilisateur 1 s'enregistre auprès du système applicatif 20 (étape S2). Plus précisément, pour pouvoir disposer des services multimédias auxquels l'utilisateur 1 a souscrit auprès de son opérateur, l'utilisateur 1 s'enregistre à l'IMS qui est l'instanciation (choisie ici pour exemple) du système applicatif. L'attachement à l'IMS se fait par l'enregistrement de l'utilisateur via la méthode SIP "Register" telle que définie dans le RFC 3261 spécifié par l'IETF. Une des données utilisée en paramètre est l'identité publique de l'utilisateur qui sert à identifier cet utilisateur auprès des utilisateurs tiers (l'utilisateur peut disposer de plusieurs identités publiques). L'enregistrement de l'utilisateur dans le système applicatif 20 lui permet de recevoir notamment des demandes d'établissement de sessions multimédias initiées par des utilisateurs tiers (provenant indifféremment d'un réseau fixe ou mobile) telle qu'une demande d'établissement d'une session conversationnelle ("chat") par exemple.

L'utilisateur 1 effectue alors une demande pour établir une session multimédia A entre son terminal mobile 2 et le système applicatif 20 (étape S3). De façon connue, l'utilisateur 1 envoie depuis son terminal une requête "INVITE" (méthode décrite dans le RFC 3261) pour établir cette session multimédia. Les données importantes correspondant aux paramètres de cette requête sont :
- l'identité publique de l'utilisateur appelant et celle de son interlocuteur appelé dans le cas d'un service conversationnel,
- le paramètre "contact" qui permet au réseau de router les informations relatives à la session (la signalisation et les données média) vers les terminaux utilisés par les utilisateurs pour la session considérée,
- les caractéristiques du média souhaité par l'appelant pour cette session à savoir : le type de média (voix, image), la qualité de service souhaitée via notamment la définition des CoDecs pour les médias activés, la présentation de l'adresse IP du terminal et des ports d'émission et de réception pour le(s) média(s) utilisé(s).

L'ensemble de ces paramètres est décrit dans la section SDP ("Session Description Protocol" - défini dans le RFC 2327) de la méthode "INVITE". Avant d'établir cette session, il y a négociation des paramètres du média entre les différents utilisateurs. L'établissement de la session multimédia se traduit au niveau du réseau mobile par un mécanisme de réservation de ressources. Dans un réseau mobile UMTS, cette réservation de ressources correspond à l'activation du "PDP Context" ("Packet Data Protocol Context") entre le terminal et le GGSN ("Gateway GPRS support Node") de l'opérateur pour le transfert du média assurant ainsi une garantie de qualité de service pour la session multimédia.

L'utilisateur 1 se déplace alors dans l'environnement extérieur en direction de l'environnement domestique 10. Lorsque l'utilisateur entre dans la zone radio domestique 160, son terminal mobile 2 détecte immédiatement la borne radio 16 émettrice du champ radio couvrant la zone radio domestique (étape S4). En effet, le terminal mobile scrute simultanément plusieurs canaux de signalisation (encore appelés voies balise) des réseaux qui l'entourent. Il est donc capable de détecter et de signaler son entrée dans la zone radio domestique (identification du réseau WiFi™ SSID). Selon les cas d'implémentation, il peut y avoir utilisation des protocoles ou clefs de sécurité WEP et WPA pour l'authentification du terminal mobile.

Une fois la liaison établie avec la borne radio 16, le terminal 2 est rattaché au réseau local domestique 150 (étape S5). Ce rattachement est réalisé grâce à la fonction connue DHCP ("Dynamic Host Control Protocol") qui permet à la passerelle domestique 15 (routeur) d'affecter une adresse I P au terminal mobile 2 entrant dans le réseau local domestique.

Le terminal mobile 2 envoie ensuite les informations relatives à l'établissement de la session multimédia en cours de l'utilisateur à travers son interface avec la passerelle domestique 15 (étape S6) (c'est-à-dire les données/paramètres nécessaires pour reproduire la session multimédia en cours). Ces informations correspondent notamment au type de session (comme le type de média sélectionné) et aux ressources réseau négociées (comme les CoDecs et la bande passante utilisées). Selon la mise en oeuvre choisie, l'envoi de ces informations peut être déclenché soit par une demande de la passerelle domestique après avoir détecté le terminal mobile (attachement), soit par le terminal mobile directement s'il a été programmé ainsi suite à sa connexion au réseau local domestique.

Dans l'étape suivante (étape S7), la passerelle domestique 15 analyse, en fonction des informations relative à la session multimédia en cours transmises par le terminal mobile, le contexte du réseau local domestique pour définir les possibilités de basculement pouvant être proposées à l'utilisateur, c'est-à-dire détermine les équipements domestiques susceptibles de prendre en charge correctement le transfert de la session multimédia en cours sur le terminal mobile 2. Cette analyse prend en compte des paramètres, comme par exemple la disponibilité des équipements domestiques connectés à la passerelle, les droits de l'utilisateur pour les équipements candidats au basculement, les capacités des équipements domestiques comme les CoDecs implémentés sur ces derniers, ainsi que la bande passante disponible. Le but de l'analyse est d'établir, en fonction de la session multimédia en cours sur le terminal mobile, les équipements domestiques susceptibles de recevoir correctement le transfert de la session.

Une fois l'analyse effectuée, la liste du (ou des) équipement(s) du réseau local domestique 150 candidat(s) est proposée à l'utilisateur 1 via son terminal mobile 2 (affichage de la liste sur le terminal), avec, éventuellement, un choix de paramètres relatifs par exemple aux CoDecs et à la bande passante (haute définition ou non) qui seront alloués à la deuxième session multimédia B (c'est-à-dire celle qui va se dérouler sur un équipement domestique après le basculement) (étape S8).

A partir de la liste proposée, l'utilisateur sélectionne l'équipement domestique (par exemple l'ordinateur PC 12) du réseau local domestique 150 à partir duquel sa session multimédia sera poursuivie après le basculement et l'information correspondant à l'équipement sélectionné est communiquée à la passerelle domestique 15 (étape S9).

En cas de refus de basculement, le procédé de basculement s'arrête et l'utilisateur poursuit sa session comme préalablement établie sur son terminal mobile. Cela signifie que la session multimédia de l'utilisateur reste transportée sur le réseau de communication mobile 21.

En cas d'acceptation de basculement sur un des équipements domestiques proposés, le procédé de l'invention se poursuit comme détaillé ci-dessous.

Les paramètres à considérer pour le basculement sont pris en compte et transmis par la passerelle domestique 15 au terminal mobile 2 (étape S10). Ces paramètres correspondent à:
- l'identité publique de l'utilisateur qui reste inchangée durant ce basculement,
- au paramètre "Contact" qui est modifié de manière à ne plus router les informations vers le terminal mobile mais vers le terminal sélectionné par l'utilisateur lors de l'étape S9. Ce paramètre "Contact", défini dans le RFC 3261, peut avoir la syntaxe suivante: *<sip:nom_utilisateur@adresss_IP_de_l'équipemnt_domestique_sél ectionné>*
- les caractéristiques du (des) média(s) résultant de l'analyse du contexte lors de l'étape S7. Ces caractéristiques sont renseignées dans les champs SDP ("Session Description Protocol"). L'adresse IP de terminal ainsi que les ports d'émission et de réception pour le(s) média(s) utilisé(s) correspondent à ceux de l'équipement domestique sélectionné dans le réseau local domestique.

Ces paramètres sont transmis par la passerelle domestique 15 au terminal mobile 2 en utilisant un protocole supporté par l'interface radio entre le terminal mobile et la passerelle domestique à partir de laquelle le terminal est appairé. Par exemple, pour une technologie Bluetooth™, le protocole Bluetooth™ CTP ("Cordless Telephony Profile") pourra être utilisé, ou, pour la technologie Wifi™, le protocole 802.11 b (/g), implémenté sur la LiveBox™ de la société France Télécom™, pourrait être utilisé.

L'envoi de ces paramètres entre la passerelle domestique et le terminal mobile peut également être effectué lors de l'étape précédente S8.

Toutefois, ces paramètres sont de préférence transmis à ce stade du procédé (étape S10) plutôt que lors de l'étape S8 car cela permet notamment d'éviter d'envoyer des informations concernant l'ensemble des équipements domestiques candidats alors que seulement certains seront choisis si l'utilisateur sollicite le basculement lors de l'étape S9. En outre, à ce stade, il est possible de décorréler les informations de niveau réseau (choix du(des) équipements domestiques) des informations de niveau applicatif (informations nécessaires à l'établissement de sessions multimédias). Une fois la sélection du terminal pour le basculement effectué (étape S9), le réseau local domestique redescend les paramètres nécessaires pour que le système applicatif prépare le basculement de la session sur l'équipement domestique choisi suite à la validation du terminal mobile (cf. étape S11 ultérieure).

Le terminal mobile 2 envoie une demande de basculement vers le système applicatif 20 (étape S11). L'ensemble des paramètres nécessaires au basculement mentionnés précédemment est présent dans la demande.

A la réception de la demande basculement par le système applicatif 20, l'opérateur vérifie la conformité de la demande avec le profil de service de l'utilisateur. Puis, le système applicatif 20 prépare le transfert de la session multimédia A (session initiale sur le terminal mobile en environnement extérieur) vers la session multimédia B (session établie vers l'équipement domestique choisi dans le réseau local domestique) (étape S12).

Si les ressources réseau requises pour la session multimédia B dans le réseau fixe 22 et au niveau du réseau local domestique 150 ne sont pas déjà disponibles avant le basculement pour le service considéré, il y a allocation de ces ressources (étape S13).

De façon optionnelle, le système applicatif peut effectuer une notification pour confirmation de la fin de session multimédia A par l'utilisateur (étape S14). Selon les possibilités d'implémentation de services, le système applicatif peut laisser le choix à l'utilisateur de déterminer la fin de sa session multimédia A en cours. D'un point de vue de l'utilisateur, ce moyen peut permettre dans certain cas le transfert sans coupure comme, par exemple, en ne coupant la session d'un match retransmis sur son terminal mobile que lorsqu'il se trouve réellement devant son poste de télévision (équipement domestique choisi préalablement).

Le système applicatif termine la session multimédia A de l'utilisateur (étape S15).

Les ressources réseaux qui étaient allouées pour la session multimédia A sont libérées au niveau du réseau mobile 21 (étape S16). De même, les ressources du réseau du correspondant en liaison avec l'utilisateur 1 dans la session multimédia A sont également libérées.

A ce moment, l'utilisateur 1 dispose de sa session multimédia B sur l'équipement domestique sélectionné du réseau local domestique 150.

La session multimédia B se poursuit jusqu'à la fin de la communication.

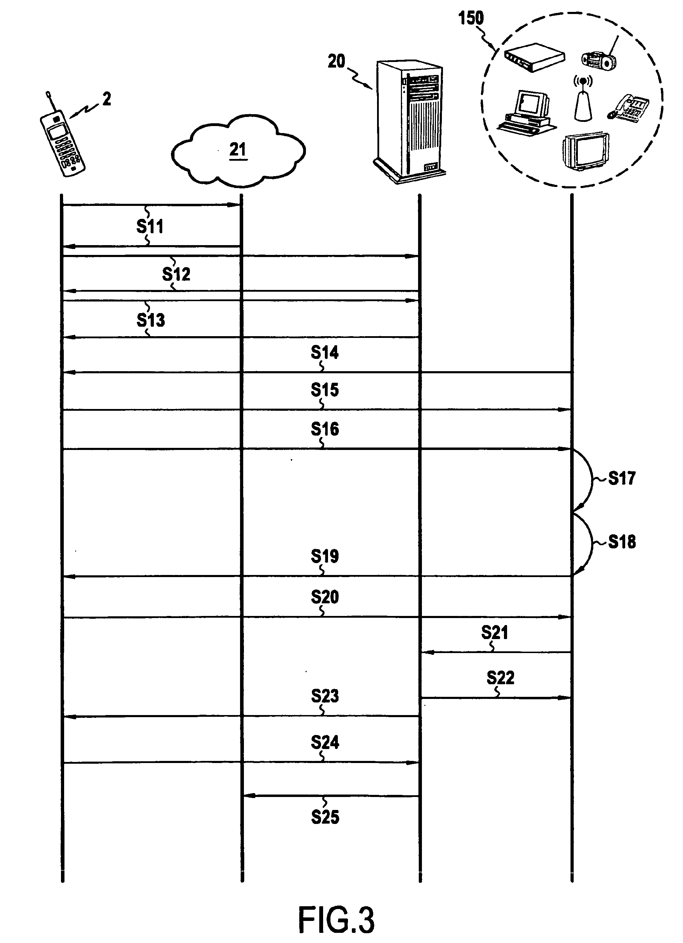

On décrit maintenant en relation avec la figure 3 une mise en oeuvre de procédé de basculement de session multimédia conformément à un autre mode de réalisation de l'invention qui est mis en oeuvre dans le système de la figure 1. Cette mise en oeuvre décrite à la figure 3 diffère de celle décrite précédemment à la figure 2 en ce que le basculement de la session multimédia est déclenché, non plus par le terminal mobile de l'utilisateur, mais par la passerelle domestique du réseau local domestique vers le système applicatif.

De même que précédemment, on considère ici que :
- il n'existe qu'un point d'accès radio à la zone radio domestique 160: la borne radio 16,
- l'utilisateur 1 n'a qu'une seule session multimédia A en cours lors du basculement,
- le basculement ne se fait que sur un équipement domestique du réseau local domestique 150.

Le service faisant l'objet de la session multimédia est un service conversationnel tel qu'une conversation par messagerie instantanée ("chat") entre deux utilisateurs.

Les étapes S11 à S19 correspondent respectivement aux étapes S1 à S9 décrites précédemment en relation avec la figure 2. Par souci de simplification, les étapes S11 à S19 ne seront pas décrites une nouvelle fois ici et on se reportera à la description des étapes S1 à S9 faite précédemment.

Pour rappel, lors de l'étape S19 l'utilisateur 1 envoie à partir de son terminal mobile 2 l'équipement domestique (par exemple l'ordinateur PC 12) du réseau local domestique 150 qu'il a sélectionné pour le basculement de sa session multimédia, l'information correspondant à l'équipement sélectionné étant communiquée à la passerelle domestique 15.

Dans ce mode de réalisation du procédé de l'invention, c'est la passerelle domestique 15 qui invoque la demande de basculement de la session multimédia vers l'équipement domestique sélectionné (étape S20). A cet effet, la passerelle domestique 15 initie une nouvelle session multimédia B en générant une nouvelle requête "INVITE" (méthode décrite dans le RFC 3261) qui intègre les paramètres résultant de l'analyse du contexte. Cette nouvelle requête "INVITE" permet à l'utilisateur de maintenir la communication (c'est-à-dire la session multimédia A) avec son correspondant tant que l'étape S23 n'est pas déclenchée pour terminer la session A Les paramètres considérés pour le basculement sont:
- l'identité publique de l'utilisateur qui reste inchangée durant ce basculement,
- le paramètre "Contact" est modifié de manière à ne plus router les informations vers le terminal mobile mais vers le terminal sélectionné par l'utilisateur lors de l'étape précédente S19. Ce paramètre "contact", défini dans le RFC 3261, peut avoir la syntaxe suivante:
   *<sip:nom_utilisateur@adresse_IP_de_l'équipemnt_domestique sélectionné>*
- dans les champs SDP : caractéristiques du(des) média(s) dont les CoDecs souhaités, adresse IP du terminal et les ports d'émission et de réception pour le(s) média(s) utilisé(s) correspondant à l'équipement sélectionné du réseau local domestique,

Les étapes suivantes S21 à S25 correspondent respectivement aux étapes S12 à S16 décrites précédemment en relation avec la figure 2 et auxquelles on se reportera par souci de simplification. La seule différence est que dans l'étape S21 (correspondant à l'étape S12 précédemment décrite avec la figure 2), la préparation du transfert de la session multimédia A (session initiale sur le terminal mobile en environnement extérieur) vers la session multimédia B (session établie vers l'équipement domestique choisi dans le réseau local domestique) est réalisé par le système applicatif 20 en réponse à la demande basculement qui est envoyée ici par la passerelle domestique 15 du réseau local domestique 150.

En permettant le basculement de la ou les sessions multimédias en cours sur le terminal mobile de l'utilisateur vers un ou plusieurs équipements d'un réseau domestique, la présente invention apporte aussi bien à l'utilisateur qu'à l'opérateur de nombreux avantages.

Au niveau de l'opérateur, l'invention permet notamment:
○ de réduire son taux de perte d'abonnés ("churn") dans sa clientèle en proposant de nouveaux services innovants qui sont rendus disponibles à l'utilisateur quelque soit le réseau d'accès utilisé,
○ d'optimiser les coûts opérationnels pour les services de réseau mobile qui pourront être transportés sur des réseaux fixes à moindre coût,
○ de permettre une continuité de service assurant à l'opérateur de conserver son client sur toute la durée de la session prolongée.

Au niveau de l'utilisateur, l'invention permet notamment:
○ d'avoir une continuité du service assurant au client de prolonger sa session lors de son entrée dans le réseau local domestique,
○ de réduire ses coûts d'utilisation des services en y accédant par un réseau fixe plutôt que mobile,
○ de créer de nouveaux usages par la possibilité du choix d'équipements variés,
○ de gérer plus facilement sa mobilité quelque soit le réseau utilisé (que ce soit en situation "indoor" ou "outdoor").

La présente invention peut être mise en oeuvre sur différents réseaux de communication mobiles 3GPP, sur tout type de réseau de communication fixe et avec tout type de systèmes applicatifs similaires à l'IMS.

## Revendications

1. Procédé de basculement de session multimédia d'un terminal mobile (2) connecté à un réseau de communication mobile (21) sur au moins un équipement domestique (11; 12; 13; 14) connecté à un réseau local domestique (150) comprenant en outre une passerelle domestique (15), le terminal mobile (2) et la passerelle domestique (15) étant en liaison avec un système applicatif (20) par lequel des sessions multimédias sont établies, ledit procédé comprenant une étape d'établissement d'au moins une première session multimédia entre le terminal mobile (2) et le système applicatif (20) via le réseau de communication mobile (21), **caractérisé en ce qu'**il comprend en outre les étapes suivantes:
a) détection de la proximité du réseau local domestique (150) par le terminal mobile (2),
b) sélection d'un ou plusieurs équipements domestiques (11-14) aptes à supporter la première session multimédia en cours sur le terminal mobile (2),
c) validation à partir du terminal mobile (2) d'au moins un équipement domestique parmi les équipements sélectionnés,
d) établissement d'une deuxième session multimédia entre l'équipement domestique validé et le système applicatif (20).

2. Procédé selon la revendication 1, **caractérisé en ce qu'**il comprend en outre, après l'étape a) et avant l'étape b), une étape a1) d'envoi, par le terminal mobile (2) à la passerelle domestique (15) du réseau local domestique (150), de données relatives à l'établissement de la première session multimédia en cours sur le terminal mobile (2).

3. Procédé selon la revendication 2, **caractérisé en ce que**, dans l'étape b), le ou les équipements domestiques (11; 12; 13; 14) sont sélectionnés par la passerelle domestique en fonction des données reçues relatives à l'établissement de la première session multimédia et des capacités des équipements domestiques connectés au réseau local domestique (150) à supporter ladite première session multimédia.

4. Procédé selon la revendication 3, **caractérisé en ce que** la passerelle domestique (15) recense, régulièrement ou en réponse à la réception des données relatives à l'établissement de la première session multimédia, au moins les capacités des équipements domestiques (11-14) connectés au réseau local domestique (150).

5. Procédé selon l'une quelconque des revendications 1 à 4, **caractérisé en ce que**, dans l'étape d), la deuxième session multimédia est établie en réponse à une demande d'établissement de session multimédia envoyée par le terminal mobile (2) au système applicatif (20).

6. Procédé selon la revendication 5, **caractérisé en ce que** des données relatives à l'établissement de la deuxième session multimédia entre l'équipement domestique validé et le système applicatif (20) sont envoyées par la passerelle domestique (15) au terminal mobile (2).

7. Procédé selon l'une quelconque des revendications 1 à 4, **caractérisé en ce que**, dans l'étape d), la deuxième session multimédia est établie en réponse à une demande d'établissement de session multimédia envoyée par la passerelle domestique (15).

8. Procédé selon l'une des revendications 1 à 7, **caractérisé en ce qu'**il comprend en outre une étape e) de clôture de la première session multimédia.

9. Terminal mobile (2) comprenant des moyens pour détecter le champ radio (160) d'une borne d'accès (16) d'un réseau local domestique (150), ledit réseau local domestique comprenant un ou plusieurs équipements domestiques (11-14) reliés à une passerelle domestique (15) et des moyens pour échanger des données avec ladite passerelle via une liaison radio avec la borne d'accès (16),
**caractérisé en ce qu'**il comprend en outre des moyens pour, en réponse à la détection du champ radio (160), envoyer à ladite passerelle domestique (15) des informations relatives à l'établissement d'une session multimédia en cours entre ledit terminal mobile (2) et un système applicatif (20) et **en ce qu'**il comprend en outre des moyens pour afficher une liste d'équipements domestiques envoyée par la passerelle domestique (15) et des moyens pour sélectionner au moins un équipement domestique (11; 12; 13; 14) dans ladite liste.

10. Terminal selon la revendication 9, **caractérisé en ce qu'**il comprend en outre des moyens pour envoyer une demande d'établissement d'une nouvelle session multimédia entre le ou les appareils domestiques sélectionnés (11; 12; 13; 14) et le système applicatif (20), ladite demande étant basée sur les informations relatives à l'établissement de la session multimédia en cours entre ledit terminal mobile (2) et le système applicatif (20).

11. Passerelle domestique (15) en liaison avec une pluralité d'équipements domestiques (11-14) dans un réseau local domestique (150), **caractérisée en ce qu'**elle comprend des moyens pour recenser au moins les capacités des équipements domestiques connectés audit réseau local domestique (150) et pour déterminer une liste d'équipements domestiques aptes à supporter une session multimédia en cours entre un terminal mobile (2) et un système applicatif (20) en fonction desdites capacités recensées et de données relatives à l'établissement de la session multimédia en cours et **en ce qu'**elle comprend en outre des moyens pour envoyer une demande d'établissement d'une nouvelle session multimédia entre au moins un appareil domestique (11; 12; 13; 14) et le système applicatif (20), ladite demande étant basée sur les informations relatives à l'établissement de la session multimédia en cours entre ledit terminal mobile (2) et le système applicatif (20).

12. Produit programme d'ordinateur téléchargeable depuis un réseau de communication et/ou stocké sur un support lisible par ordinateur et/ou exécutable par un microprocesseur d'un terminal mobile (2) comprenant des moyens pour détecter le champ radio (160) d'une borne d'accès (16) d'un réseau local domestique (150), ledit réseau local domestique comprenant un ou plusieurs équipements domestiques (11-14) reliés à une passerelle domestique (15), ledit terminal mobile (2) comprenant des moyens pour échanger des données avec ladite passerelle via une liaison radio avec la borne d'accès (16),
**caractérisé en ce qu'**il comprend des instructions de code de programme pour, en réponse à la détection du champ radio (160), envoyer à ladite passerelle domestique (15) des informations relatives à l'établissement d'une session multimédia en cours entre ledit terminal mobile (2) et un système applicatif (20) et **en ce qu'**il comprend en outre des instructions de code de programme pour afficher une liste d'équipements domestiques envoyée par la passerelle domestique (15) et des moyens pour sélectionner au moins un équipement domestique (11; 12; 13; 14) dans ladite liste.

13. Programme selon la revendication 12, **caractérisé en ce qu'**il comprend en outre des instructions de code de programme pour envoyer une demande d'établissement d'une nouvelle session multimédia entre le ou les appareils domestique sélectionnés (11; 12; 13; 14) et le système applicatif (20), ladite demande étant basée sur les informations relatives à l'établissement de la session multimédia en cours entre ledit terminal mobile (2) et le système applicatif (20).

14. Produit programme d'ordinateur téléchargeable depuis un réseau de communication et/ou stocké sur un support lisible par ordinateur et/ou exécutable par un microprocesseur d'une passerelle domestique (15) en liaison avec une pluralité d'équipements domestiques (11-14) dans un réseau local domestique (150), **caractérisé en ce qu'**il comprend des instructions de code de programme pour recenser au moins les capacités des équipements domestiques connectés au réseau local domestique (150) et pour déterminer une liste d'équipements domestiques aptes à supporter une session multimédia en cours entre un terminal mobile (2) et un système applicatif (20) en fonction desdites capacités recensées et de données relatives à l'établissement de la session multimédia en cours et **en ce qu'**il comprend en outre des instructions de code de programme pour envoyer une demande d'établissement d'une nouvelle session multimédia entre au moins un appareil domestique (11; 12; 13; 14) et le système applicatif (20), en réponse à une validation dudit au moins un équipement domestique à partir du terminal mobile, ladite demande étant basée sur les informations relatives à l'établissement de la session multimédia en cours entre ledit terminal mobile (2) et le système applicatif (20).

15. Support d'enregistrement sur lequel est stocké le programme selon l'une des revendications 12 à 14.

## Claims

1. Method for switching multimedia sessions from a mobile terminal (2) connected to a mobile communication network (21) to at least one home equipment (11; 12; 13; 14) connected to a home local area network (150) further including a home gateway (15), the mobile terminal (2) and the home gateway (15) being connected to an applicative system (20) by means of which the multimedia sessions are established, said method including a step of establishing a first multimedia session between the mobile terminal (2) and the applicative system (20) via the mobile communication network (21), **characterized in that** the method further includes the following steps:
a) detection of the proximity of the home local area network (150) by the mobile terminal (2),
b) selection of one or more home equipments (11-14) capable of supporting the first multimedia session in progress on the mobile terminal (2),
c) validation by the mobile terminal (2) of at least one home equipment among the selected equipments,
d) establishment of a second multimedia session between the validated home equipment and the applicative system (20).

2. Method according to Claim 1, **characterized in that** it further includes, after step a) and before step b), a step a1) of the mobile terminal (2) sending to the home gateway (15) of the home local area network (150) data relating to the establishment of the first multimedia session in progress on the mobile terminal (2).

3. Method according to Claim 2, **characterized in that**, in step b), the home equipment (s) (11; 12; 13; 14) are selected by the home gateway as a function of the received data relating to the establishment of the first multimedia session and the capacities of the home equipments connected to the home local area network (150) to support said first multimedia session.

4. Method according to Claim 3, **characterized in that**, regularly or in response to reception of the data relating to the establishment of the first multimedia session, the home gateway (15) identifies at least the capacities of the home equipments (11 - 14) connected to the home local area network (150).

5. Method according to any one of Claims 1 to 4, **characterized in that**, in step d), the second multimedia session is established in response to a multimedia session establishment request sent by the mobile terminal (2) to the applicative system (20).

6. Method according to Claim 5, **characterized in that** data relating to the establishment of the second multimedia session between the validated home equipment and the applicative system (20) is sent by the home gateway (15) to the mobile terminal (2).

7. Method according to any one of Claims 1 to 4, **characterized in that**, in step d), the second multimedia session is established in response to a multimedia session establishment request sent by the home gateway (15).

8. Method according to any one of claims 1 to 7, **characterized in that** it further comprises a step e)of closure of the first multimedia session

9. Mobile terminal (2) including means for detecting the radio field (160) of a base station (16) of a home local area network (150), said home local area network including one or more home equipments (11
- 14) connected to a home gateway (15) and means for exchanging data with said gateway via a radio link with the base station (16), **characterized in that** it further includes means for sending to said home gateway (15), in response to detection of the radio field (160), information relating to the establishment of a multimedia session in progress between said mobile terminal (2) and an applicative system (20), and **in that** it further includes means for displaying a list of home equipments sent by the home gateway (15) and means for selecting at least one home equipment (11; 12; 13; 14) in said list.

10. Terminal according to Claim 9, **characterized in that** it further includes means for sending a request for establishment of a new multimedia session between the selected home equipment(s) (11; 12; 13; 14) and the applicative system (20), said request being based on the information relating to the establishment of the multimedia session in progress between said mobile terminal (2) and the applicative system (20).

11. Home gateway (15) adapted to be connected to a plurality of home equipments (11 - 14) in a home local area network (150), **characterized in that** it includes means for identifying at least the capacities of the home equipments connected to said home local area network (150) and for determining a list of home equipments capable of supporting a multimedia session in progress between a mobile terminal (2) and an applicative system (20) as a function of said identified capacities and data relating to the establishment of the multimedia session in progress, and **in that** it further includes means for sending a request for establishment of a new multimedia session between at least one home equipment (11; 12; 13; 14) and the applicative system (20) in response to validation of said at least one home equipment from the mobile terminal, said request being based on the information relating to the establishment of the multimedia session in progress between said mobile terminal (2) and the applicative system (20).

12. Computer program product downloadable from a communication network and/or stored on a computer-readable medium and/or executable by a microprocessor of a mobile terminal (2) including means for detecting the radio field (160) of a base station (16) of a home local area network (150), said home local area network including one or more home equipments (11-14) connected to a home gateway (15), said mobile terminal (2) including means for exchanging data with said gateway via a radio link with the base station (16), **characterized in that** it includes program code instructions for sending to said home gateway (15), in response to detection of the radio field (160), information relating to the establishment of a multimedia session in progress between said mobile terminal (2) and an applicative system (20), and **in that** it further includes program code instructions for displaying a list of home equipments sent by the home gateway (15) and means for selecting at least one home equipment (11; 12; 13; 14) in said list.

13. Program according to Claim 12, **characterized in that** it further includes program code instructions for sending a request for establishing a new multimedia session between the selected home equipment(s) (11; 12; 13; 14) and the applicative system (20), said request being based on the information relating to the establishment of the multimedia session in progress between said mobile terminal (2) and the applicative system (20).

14. Computer program product downloadable from a communication network and/or stored on a computer-readable medium and/or executable by a microprocessor of a home gateway (15) connected to a plurality of home equipments (11 - 14) in a home local area network (150), **characterized in that** it includes program code instructions for identifying at least the capacities of the home equipments connected to the home local area network (150) and for determining a list of home equipments capable of supporting a multimedia session in progress between a mobile terminal (2) and an applicative system (20) as a function of said identified capacities and data relating to the establishment of the multimedia session in progress, and **in that** it further includes program code instructions for sending a request for establishment of a new multimedia session between at least one home equipment (11; 12; 13; 14) and the applicative system (20) in response to validation of said at least one home equipment from the mobile terminal, said request being based on the information relating to the establishment of the multimedia session in progress between said mobile terminal (2) and the applicative system (20).

15. Storage medium storing the program according to any one of claims 12 to 14.

## Patentansprüche

1. Verfahren zum Umschalten einer Multimediasitzung eines mobilen Endgeräts (2), das mit einem Mobilkommunikationsnetz (21) verbunden ist, zu mindestens einem Heimgerät (11; 12; 13; 14), das mit einem lokalen Heimnetz (150) verbunden ist, das außerdem ein Heimgateway (15) umfasst, wobei das mobile Endgerät (2) und das Heimgateway (15) mit einem Applikationssystem (20) in Verbindung stehen, durch welches Multimediasitzungen eingerichtet werden, wobei das Verfahren einen Schritt der Einrichtung mindestens einer ersten Multimediasitzung zwischen dem mobilen Endgerät (2) und dem Applikationssystem (20) über das Mobilkommunikationsnetz (21) umfasst, **dadurch gekennzeichnet, dass** es außerdem die folgenden Schritte umfasst:
a) Detektion der Nähe des lokalen Heimnetzes (150) durch das mobile Endgerät (2),
b) Auswahl eines oder mehrerer Heimgeräte (11-14), die geeignet sind, die erste Multimediasitzung zu unterstützen, die auf dem mobilen Endgerät (2) läuft,
c) Validierung mindestens eines Heimgerätes unter den ausgewählten Heimgeräten von dem mobilen Endgerät (2) aus,
d) Einrichtung einer zweiten Multimediasitzung zwischen dem validierten Heimgerät und dem Applikationssystem (20).

2. Verfahren nach Anspruch 1, **dadurch gekennzeichnet, dass** es außerdem, nach dem Schritt a) und vor dem Schritt b), einen Schritt a1) des Sendens von Daten, welche die Einrichtung der auf dem mobilen Endgerät (2) laufenden ersten Multimediasitzung betreffen, durch das mobile Endgerät (2) an das Heimgateway (15) des lokalen Heimnetzes (150) umfasst.

3. Verfahren nach Anspruch 2, **dadurch gekennzeichnet, dass** im Schritt b) das oder die Heimgeräte (11; 12; 13; 14) durch das Heimgateway in Abhängigkeit von den empfangenen Daten, welche die Einrichtung der ersten Multimediasitzung betreffen, und von den Kapazitäten der mit dem lokalen Heimnetz (150) verbundenen Heimgeräte, welche die erste Multimediasitzung unterstützen sollen, ausgewählt wird bzw. werden.

4. Verfahren nach Anspruch 3, **dadurch gekennzeichnet, dass** das Heimgateway (15) regelmäßig oder als Reaktion auf den Empfang der Daten, welche die Einrichtung der ersten Multimediasitzung betreffen, mindestens die Kapazitäten der Heimgeräte (11-14) erfasst, die mit dem lokalen Heimnetz (150) verbunden sind.

5. Verfahren nach einem der Ansprüche 1 bis 4, **dadurch gekennzeichnet, dass** im Schritt d) die zweite Multimediasitzung als Reaktion auf eine Anforderung zur Einrichtung einer Multimediasitzung, die von dem mobilen Endgerät (2) an das Applikationssystem (20) gesendet wird, eingerichtet wird.

6. Verfahren nach Anspruch 5, **dadurch gekennzeichnet, dass** Daten, welche die Einrichtung der zweiten Multimediasitzung zwischen dem validierten Heimgerät und dem Applikationssystem (20) betreffen, von dem Heimgateway (15) an das mobile Endgerät (2) gesendet werden.

7. Verfahren nach einem der Ansprüche 1 bis 4, **dadurch gekennzeichnet, dass** im Schritt d) die zweite Multimediasitzung als Reaktion auf eine Anforderung zur Einrichtung einer Multimediasitzung, die von dem Heimgateway (15) gesendet wird, eingerichtet wird.

8. Verfahren nach einem der Ansprüche 1 bis 7, **dadurch gekennzeichnet, dass** es außerdem einen Schritt e) des Schließens der ersten Multimediasitzung umfasst.

9. Mobiles Endgerät (2), welches Mittel zum Detektieren des Funkfeldes (160) eines Zugangsanschlusses (16) eines lokalen Heimnetzes (150) umfasst, wobei das lokale Heimnetz ein oder mehrere Heimgeräte (11-14), die mit einem Heimgateway (15) verbunden sind, und Mittel zum Austauschen von Daten mit dem Heimgateway über eine Funkverbindung mit dem Zugangsanschluss (16) umfasst,
**dadurch gekennzeichnet, dass** es außerdem Mittel umfasst, um als Reaktion auf die Detektion des Funkfeldes (160) an das Heimgateway (15) Informationen zu senden, welche die Einrichtung einer zwischen dem mobilen Endgerät (2) und einem Applikationssystem (20) laufenden Multimediasitzung betreffen, und dadurch, dass es außerdem Mittel zum Anzeigen einer Liste von Heimgeräten, die von dem Heimgateway (15) gesendet wird, und Mittel zum Auswählen mindestens eines Heimgerätes (11; 12; 13; 14) aus dieser Liste umfasst.

10. Endgerät nach Anspruch 9, **dadurch gekennzeichnet, dass** es außerdem Mittel zum Senden einer Anforderung zur Einrichtung einer neuen Multimediasitzung zwischen dem oder den ausgewählten Heimgerät (en) (11; 12; 13; 14) und dem Applikationssystem (20) umfasst, wobei diese Anforderung auf den Informationen basiert, welche die Einrichtung der zwischen dem mobilen Endgerät (2) und dem Applikationssystem (20) laufenden Multimediasitzung betreffen.

11. Heimgateway (15), welches mit mehreren Heimgeräten (11-14) in einem lokalen Heimnetz (150) in Verbindung steht, **dadurch gekennzeichnet, dass** es Mittel umfasst, um mindestens die Kapazitäten der Heimgeräte zu erfassen, die mit dem lokalen Heimnetz (150) verbunden sind, und um eine Liste von Heimgeräten, die geeignet sind, eine zwischen einem mobilen Endgerät (2) und einem Applikationssystem (20) laufende Multimediasitzung zu unterstützen, in Abhängigkeit von den erfassten Kapazitäten und von Daten, welche die Einrichtung der laufenden Multimediasitzung betreffen, zu bestimmen, und dadurch, dass es außerdem Mittel umfasst, um eine Anforderung zur Einrichtung einer neuen Multimediasitzung zwischen mindestens einem Heimgerät (11; 12; 13; 14) und dem Applikationssystem (20) als Reaktion auf eine Validierung dieses mindestens einen Heimgerätes von dem mobilen Endgerät aus zu senden, wobei diese Anforderung auf den Informationen basiert, welche die Einrichtung der zwischen dem mobilen Endgerät (2) und dem Applikationssystem (20) laufenden Multimediasitzung betreffen.

12. Computerprogrammprodukt, welches von einem Kommunikationsnetz heruntergeladen werden kann und/oder auf einem computerlesbaren Träger gespeichert ist und/oder von einem Mikroprozessor eines mobilen Endgerätes (2) ausgeführt werden kann, das Mittel zum Detektieren des Funkfeldes (160) eines Zugangsanschlusses (16) eines lokalen Heimnetzes (150) umfasst, wobei das lokale Heimnetz ein oder mehrere Heimgeräte (11-14), die mit einem Heimgateway (15) verbunden sind, umfasst, wobei das mobile Endgerät (2) Mittel zum Austauschen von Daten mit dem Heimgateway über eine Funkverbindung mit dem Zugangsanschluss (16) umfasst,
**dadurch gekennzeichnet, dass** es Programmcodeanweisungen umfasst, um als Reaktion auf die Detektion des Funkfeldes (160) an das Heimgateway (15) Informationen zu senden, welche die Einrichtung einer zwischen dem mobilen Endgerät (2) und einem Applikationssystem (20) laufenden Multimediasitzung betreffen, und dadurch, dass es außerdem Programmcodeanweisungen zum Anzeigen einer Liste von Heimgeräten, die von dem Heimgateway (15) gesendet wird, und Mittel zum Auswählen mindestens eines Heimgerätes (11; 12; 13; 14) aus dieser Liste umfasst.

13. Programm nach Anspruch 12, **dadurch gekennzeichnet, dass** es außerdem Programmcodeanweisungen zum Senden einer Anforderung zur Einrichtung einer neuen Multimediasitzung zwischen dem oder den ausgewählten Heimgerät (en) (11; 12; 13; 14) und dem Applikationssystem (20) umfasst, wobei diese Anforderung auf den Informationen basiert, welche die Einrichtung der zwischen dem mobilen Endgerät (2) und dem Applikationssystem (20) laufenden Multimediasitzung betreffen.

14. Computerprogrammprodukt, welches von einem Kommunikationsnetz heruntergeladen werden kann und/oder auf einem computerlesbaren Träger gespeichert ist und/oder von einem Mikroprozessor eines Heimgateways (15) ausgeführt werden kann, das mit mehreren Heimgeräten (11-14) in einem lokalen Heimnetz (150) in Verbindung steht, **dadurch gekennzeichnet, dass** es Programmcodeanweisungen umfasst, um mindestens die Kapazitäten der Heimgeräte zu erfassen, die mit dem lokalen Heimnetz (150) verbunden sind, und um eine Liste von Heimgeräten, die geeignet sind, eine zwischen einem mobilen Endgerät (2) und einem Applikationssystem (20) laufende Multimediasitzung zu unterstützen, in Abhängigkeit von den erfassten Kapazitäten und von Daten, welche die Einrichtung der laufenden Multimediasitzung betreffen, zu bestimmen, und dadurch, dass es außerdem Programmcodeanweisungen umfasst, um eine Anforderung zur Einrichtung einer neuen Multimediasitzung zwischen mindestens einem Heimgerät (11; 12; 13; 14) und dem Applikationssystem (20) als Reaktion auf eine Validierung dieses mindestens einen Heimgerätes von dem mobilen Endgerät aus zu senden, wobei diese Anforderung auf den Informationen basiert, welche die Einrichtung der zwischen dem mobilen Endgerät (2) und dem Applikationssystem (20) laufenden Multimediasitzung betreffen.

15. Speichermedium, auf dem das Programm nach einem der Ansprüche 12 bis 14 gespeichert ist.
